# EUROPEAN PATENT SPECIFICATION

(11) **EP 0 194 520 B1**
(45) Date of publication and mention of the grant of the patent: **24.11.1993**
(21) Application number: 86102570.8
(22) Date of filing: 27.02.1986
(51) Int. Cl.: G05F 1/46, G01S 7/28

(54) **Voltage regulator for line modulators for use in transmitters for radar applications**
Spannungsregler für Leitungsmodulator zur Verwendung in Sendern bei Radaranwendung
Régulateur de tension de modulateur de ligne pour transmetteurs appliqués aux radars

(30) Priority: 28.02.1985 IT 4775485
(43) Date of publication of application: 17.09.1986
(73) Proprietor: SELENIA INDUSTRIE ELETTRONICHE ASSOCIATE S.p.A., I-00131 Roma (IT)
(72) Inventor: Cervone, Piero, I-Roma (IT); Giaccari, Ennio, I-Roma (IT); Pace, Roberto, I-Monterotondo (IT)
(74) Representative: Gustorf, Gerhard, Dipl.-Ing.

(56) References cited:
- EP-A- 0 072 153
- DE-A- 2 932 791
- FR-A- 2 590 745
- US-A- 3 445 754
- US-A- 3 760 256

## Description

The present invention relates to a device for voltage regulation for a radar system as set forth in the preamble of the claim.

Such a device is known by DE-A 29 32 791. Further, in EP-A 72 153 a generator of short duration high power pulses is described which is operative to produce a series of very short high energy pulses by allowing a reactive network to charge periodically from a d.c. power supply over a relatively long interval, and then rapidly discharging the accumulated energy into a load.

It is the principal object of the present invention to improve upon the stability of a radar system and particularly the transmitting stability thereof by providing an improved voltage regulator which allows overall improvements in the stability of the modulating signal V_{K}(t).

Another object of this invention is to provide an improved voltage regulator for a radar transmitter.

These objects are attained, in accordance with the present invention in a device for voltage regulation in a radar transmitter as characterised in the claim.

Radar transmitters are required to provide high reproducibility of a transmitted waveform so that modifications of the echoes received, in terms of phase and amplitude, can be evaluated to ascertain characteristics of the target. To maintain the square wave amplitude and phase of the transmitted waveform constant in time requires high short term stability of the modulated signal, of the radio frequency source and the final amplification stage.

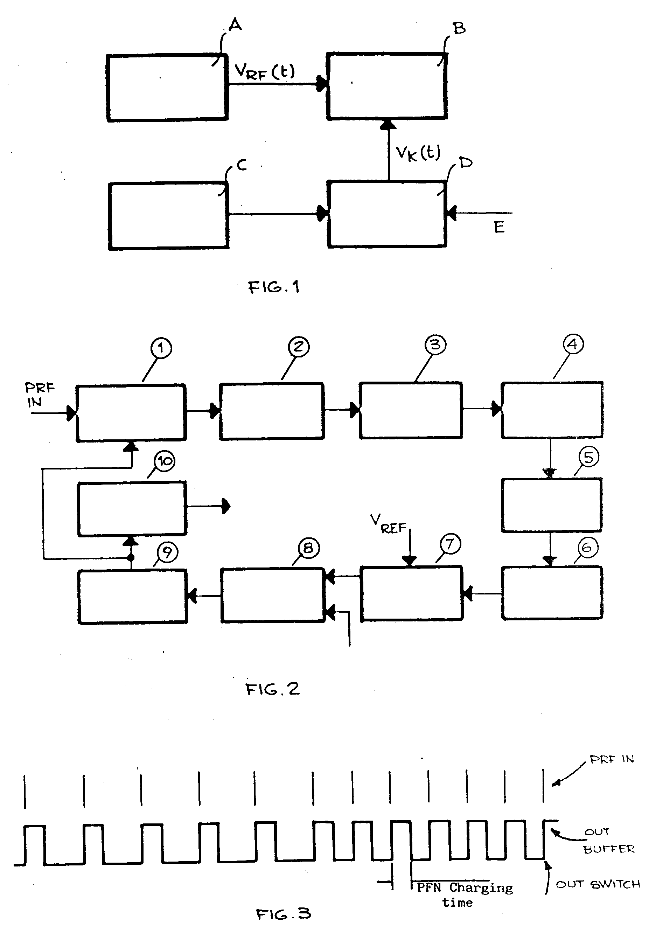

Figure 1 shows the block diagram of the principle of operation of a chain generating the transmission pulse. Cathode modulated power amplifiers are characterized by two parameters which stand for their amplitude and phase sensitivity as a function of the stability of the video modulating pulse V_{K}(t).

With the same power amplifier characteristics, the transmitting system is all the more stable the better the pulse to pulse stability of the modulating signal V_{K}(t) is.

Processing systems, at reception, are generally of the Moving Target Indicator (MTI), Moving Target Detector (MTD) type so as to suppress fixed echoes and detest the moving ones, characterized by Doppler frequencies different than zero. Such systems require that the transmission rate varies from pulse to pulse or from group of pulses to group of pulses by an amount which, peak to peak, may reach up to 20% of the mean value. With very sophisticated modulators, we may expect transmission pulses stability of the order of 0.1% with acceptable circuit complexity. By using good power transmitting tubes and modulators having characteristics as those shown above, it is possible to assure a degree of stability of the characteristics of the RF pulses transmitted, such as to achieve, typically, an ability to suppress fixed echoes of about 40 dB.

This value is a penalty of the order of about ten decibel with respect to what can be achieved taking into account the stability which could be required of the other elements of the transmitting and receiving chains and to the possibility of adopting sophisticated processing systems.

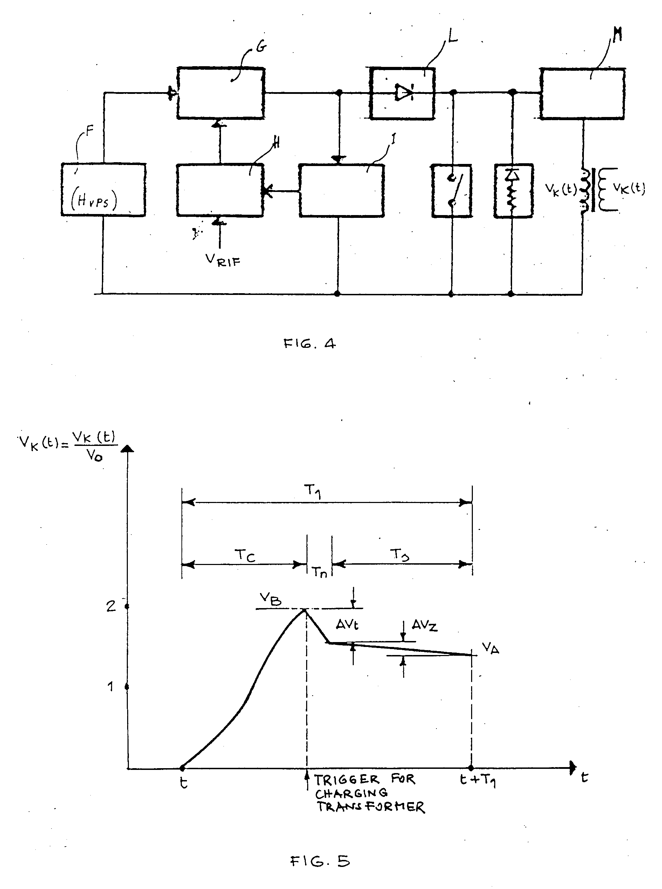

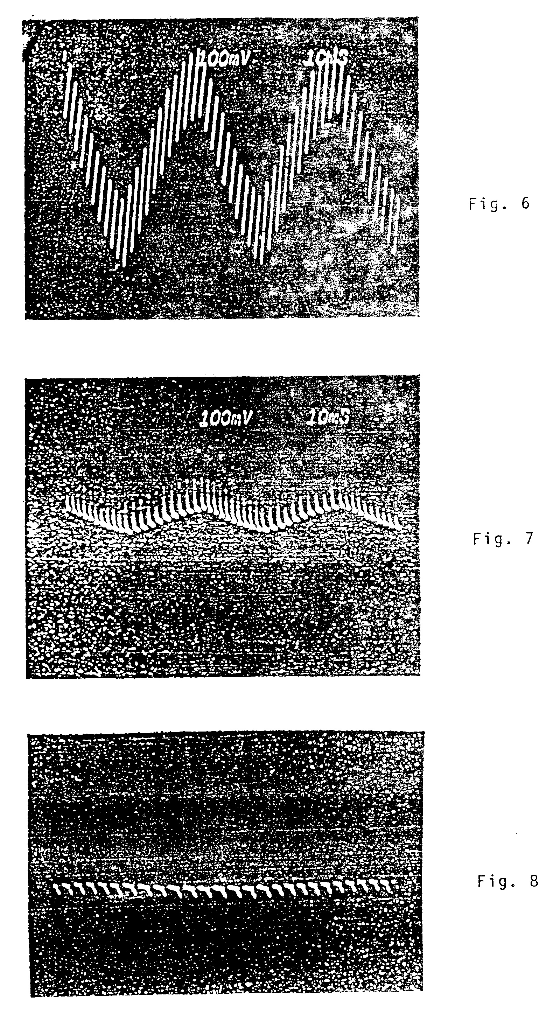

Through the device which is described in the following we can achieve, for short term stability of line modulators used in transmitters for radar applications, and of which Figure 2 shows the conventional block diagram, substantial improvements which would not be possible otherwise. This may be verified by an analysis of Figure 5, which shows the time function of voltage V_{K}(t) at the output of the Pulse Forming Network, (PFN) Figure 3, normalized against the average value V₀ of the output voltage of the power supply. As it can be seen, the high voltage power supply is applied to a load which varies sharply with the radar repetition period.

It follows that at the power supply output, together with the mains ripple at the mains voltage frequency, a load ripple having the same repetion frequency as the Pulse Repetition Frequency (PRF) will appear.

Together they contribute in varying the charging transformer SCR trigger timing. To these variations, different values of the current circulating in the charging diode correspond, with consequential variation of the turnoff time Tn, and therefore of Δ V, and therefore of VA. In real life, if PRF is constant, Tn variations, and therefore those of Δ V, and finally of VA, are due to the load ripple alone. If PRF is not constant, then the load ripple is responsible for a further variation of the trigger time of the charging transformer SCRs; to this, for each trigger, a different value of the current circulating in the charging diode and a consequential variation of turnoff time Tn corresponds.

The result is a Δ V₁ variation (and to a much lesser degree a Δ V₂ variation) and ultimately a variation of Vₐ. All this is seen by the power supply as a further condition of time variable load having the same period as that of transmission pulse staggering. The end result is that the output voltage of the power supply, as well as by the supply ripple, is affected by a load ripple having the stagger frequency i.e. the variation frequency of the PRF, with overlayed a further ripple at the PRF. This condition is shown in figure 6 which shows the ripple variation at the power supply output for a transmission rate which takes on two values every group of 10 pulses. The consequential ripple at the pulse forming network (PFN) is shown at Figure 7. Bearing in mind what we have said on the mechanism of the phenomenon, it will be appreciated that to stave off the load and mains ripple, one must resort to either diodes having turn off times which are less dependent on the current crossing them, or to seek for improvements in the response characteristics of the regulator to load variations. With today's operational requirements, the two options seem unpractical: for the diodes (which must switch high voltages) there are technological constraints in reducing turn off times and reducing their dependence on the diode current, when change of polarity is required; for the power supply we are faced with weight and dimension increases which the high voltages involved make all the more penalizing for an industrial product.

The device for which the patent is applied, solves the problem in a consistent and reliable manner: it does not require for the diodes neither technological advances which may be unlikely, and at any rate costly, nor for the power supply operational characteristics which, more than demanding, are essentially unpractical.

The idea behind the device herin presented is to provide a variation at low voltage of the signal governing the PFN charging circuit so as to compensate for the load ripple variations due to non constant PRF which are introduced into the modulators operation.

The device is also capable of compensating for the mains ripple, as the integration network time constant is set equal to that of the high voltage power supply filter.

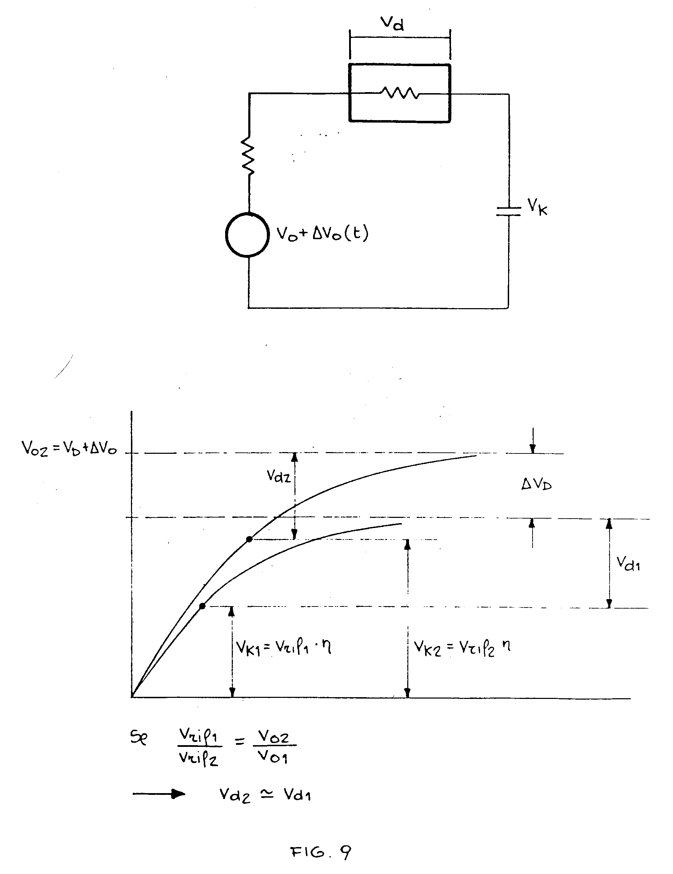

This compensation, as can be seen in Figure 9, which for simplicity refers to a non resonant charge case, warrants that the voltage, and therefore the current circulating, present at the terminals of the charging diode, at the time of change of polarity, does not change from pulse to pulse; of course it implies that we must add to the reference voltage an error waveform having amplitude and duration dependant upon the load ripple present at the output of the power supply and which may be derived from the sequence of the repetition pulses using the time intervals between subsequent radar triggers to reconstruct this low voltage error signal.

The invention will now be described with the purpose of illustrating the device, which is not limited to the description, with reference to the figures attached:
Figure 1 shows the principle of operation schematic of the transmission pulse generation. Its component parts are labled as follows:
   A Radio Frequency generator
   B Power Amplifier
   C High voltage power supply
   D Modulator
   E Transmission rate signal
Figure 2 shows the block diagram of the voltage regulator. Its parts are indicated as:
   1 Set/Reset circuit
   2 Switch to ground
   3 Integrating network
   4 Peak detector
   5 Memory circuit
   6 Amplifier
   7 Summing network
   8 Comparator
   9 Synchronizing signal generator
   10 Control circuit
Figure 3 Square waveform, having level 1 duration equal to the PFN charge time and level (1 + ∅) equal to the radar frequency.
Figure 4 Shows the traditional schematic of a resonant discharge modulator, where:
   F is the high voltage power supply
   G is the load transformer
   H is the regulator
   I is the high voltage divider
   L is the load diode
   M is the Pulse Forming Network PFN
Figure 5 Time function of the voltage at the output of the pulse forming network where:
   - T_{I}: is the radar pulse repetition period;
   - T_{C}: is the charging period of the resonant load;
   - Tₙ: is the turn off time (which varies with the current crossing the diode) of the charging diode;
   - T_{S}: is the PFN discharge time due to parassitic losses;
   - Vₐ: is the modulation pulse peak value.
Figure 6 Ripple at the power supply output for PRF varying every 10 pulses.
Figure 7 Ripple at the output of the PFN.
Figure 8 Effect of the stabilizing device on ripple at the PFN output. Compare with figure 7.
Figure 9 Non resonant load case. Conditions to assure that at the terminals of the charging diode, voltage Vd, present at turn off, is unchanged.

The error signal reconstruction is achieved through the device shown in figure 2. It can be seen that the device has an input set/reset circuit which generates a square wave having level 1 duration equal to PFN charge time and 1 + Ø level equal to the radar frequency as shown in Fig. 3.

To this end, the set level is controlled by the radar PRF and the reset trigger is generated by comparing PFN charge voltage and reference voltage.

The output waveform from the set/reset circuit, controls a switch (2) which discharges the integration network (3) to which it is connected for a time proportional to that of the PFN charging time and charges it for the full time elapsing between the regulating point and the next radar pulse. The integration network time constant is made equal to that of the high voltage power supply filter.

The peak detector (4) charges up to the ripple peak value and provides a signal with an amplitude which varies proportionally with the radar PRF.

This signal passes through a buffer circuit (5), amplified by an amplifier (6), inverted and sent to a summing network (7) which sums it to the reference voltage. This way we have a reference voltage which is corrected by a signal which updates, pulse by pulse, the comparison point with the high voltage divider within the comparator (8).

At the time when the comparison gives zero as a result, a synchronizing signal is generated by the trigger generator (9), which blocks, through the control circuit (10), the charging voltage of the PFN. This stabilising device, used on modulators within which there are very high voltages, is operating entirely at low voltages and relies upon simple manipulation of signals. It also has a very important propriety, in radar terms: that of being adaptive for the repetition frequency.

The stability of the modulator controlled by the device which is presented herein reaches values of the order of 0.01% with consequential capability to suppress fixed echoes of the order of 60 dB, with a recovery of 10 dB over solutions which are not equipped with the device described.

## Claims

1. Device for voltage regulation for a radar system having a pulsed radar frequency to compensate for voltage variations in a resonant discharge module having a pulse forming network (M) and a high voltage divider (I) connected to a high voltage power supply (F) with a high voltage power supply filter, such that said device is capable of generating a signal adapted to be used in said resonant discharge module for radar transmitters, said device comprising:
- a comparison circuit (8) coupled to said high voltage divider (I),
- a synchronizing generator (9) coupled to said comparison circuit (8) whereby, if an output of said comparison circuit is zero, said synchronizing generator (9) generates a synchronizing signal, and
- a control circuit (10) coupled to said synchronizing generator (9) and coupled to said pulse forming network (M) for blocking charging of said pulse forming network (M) upon receipt of said synchronizing signal,
characterized by:
- a summing circuit (7) providing an updated reference signal to said comparison circuit for comparison with said high voltage divider (I);
- a set/reset circuit (1) for generating a square wave having a first period equal to a charging time of said pulse forming network (M) and a second period equal to that of the pulsed radar frequency;
- an integration network (3) having a time constant equal to that of the high voltage power supply filter,
- a switch to ground (2) coupled to said set/reset circuit (1) and coupled to said integration network (3) for discharging said integration network during said first period and charging said integration network during said second period;
- a peak detector (4) coupled to said integration network (3) for generating an output signal with an amplitude which varies proportionally with said pulsed radar frequency;
- an amplifier (6) coupled to said peak detector (4) and producing an output corresponding to the amplified output signal of said peak detector (4), and whereby the
- summing circuit (7) summs said output of said amplifier (6) with a reference signal forming the updated reference signal.

## Patentansprüche

1. Vorrichtung zur Spannungsregelung für ein Radarsystem mit einer gepulsten Radarfrequenz zur Kompensierung von Spannungsschwankungen in einem resonanten Entladungsmodul mit einer Impulsformerschaltung (M) und einem Hochspannungs-Frequenzteiler (I), die an eine Hochspannungs-Energieversorgungsquelle (F) mit einem Hochspannungsfilter angeschlossen sind derart, daß die Vorrichtung ein Signal zur Verwendung in dem resonanten Entladungsmodul für Radarsender erzeugen kann, umfassend
- eine Vergleichsschaltung (8), die an den Hochspannungs-Frequenzteiler (I) angeschlossen ist,
- einen mit der Vergleichsschaltung (8) verbundenen Taktgeber(9), der ein Synchronsignal erzeugt, wenn am Ausgang der Vergleichsschaltung ein Nullsignal vorliegt, sowie
- eine mit dem Taktgeber (9) und der Impulsformerschaltung (M) verbundene Steuereinheit (10) zur Ladungsunterbrechung der Impulsformerschaltung (M) beim Empfang des Synchronsignals,
gekennzeichnet durch
- eine Additionsschaltung (7), die an die Vergleichsschaltung (8) ein aktualisiertes Bezugssignal zum Vergleich mit dem Hochspannungs-Frequenzteiler (I) abgibt,
- eine Einstell/Rückstell-Schaltung (1) zur Erzeugung einer Rechteckwelle mit einem ersten Abschnitt, der der Ladezeit des Impulsformer-Netzwerks (M) entspricht, und mit einem zweiten Abschnitt, der der gepulsten Radarfrequenz entspricht,
- ein Integrationsglied (3) mit einer Zeitkonstante, die mit derjenigen des Hochspannungs-Energieversorgungsfilters übereinstimmt,
- einen Masseschalter (2), der mit der Einstell/Rückstell-Schaltung (1) und dem Integrationsglied (3) verbunden ist und das Integrationsglied (3) während des ersten Abschnitts entlädt und während des zweiten Abschnitts auflädt,
- einen mit dem Integrationsglied (3) verbundenen Spitzendetektor (4) zur Erzeugung eines Ausgangssignals, dessen Amplitude sich proportional mit der gepulsten Radarfrequenz ändert,
- einen mit dem Spitzendetektor (4) verbundenen Verstärker (6), der ein Ausgangssignal erzeugt, das dem verstärkten Ausgangssignal des Spitzendetektors (4) entspricht,
- wobei die Additionsschaltung (7) das Ausgangssignal des Verstärkers (6) und ein Bezugssignal addiert und ein aktualisiertes Bezugssignal erzeugt.

## Revendications

1. Dispositif de régulation de tension destiné à un système radar, présentant une fréquence radar impulsionnelle pour compenser les variations de tension dans un module de décharge résonnant ayant un réseau de formation d'impulsions (M) et un diviseur haute tension (I) relié à une alimentation de puissance haute tension (F) munie d'un filtre d'alimentation de puissance haute tension, tel que ledit dispositif soit capable de générer un signal pouvant être utilisé dans ledit module de décharge résonnant pour transmetteurs de radar, ledit dispositif comprenant :
- un circuit de comparaison (8) relié audit diviseur haute tension (I),
- un générateur de synchronisation (9) relié audit circuit de comparaison (8), ledit générateur de synchronisation (9) produisant un signal de synchronisation si une sortie dudit circuit de comparaison est égale à zéro, et
- un circuit de commande (10) relié audit générateur de synchronisation (9) et relié audit réseau de formation d'impulsions (M) pour bloquer le chargement dudit réseau de formation d'impulsions (M) à réception dudit signal de synchronisation,
caractérisé par :
- un circuit de sommation (7) fournissant un signal de référence actualisé audit circuit de comparaison pour comparaison avec ledit diviseur haute tension (I) ;
- un circuit de mise en marche/remise à zéro (1) pour générer une onde carrée possédant une première période égale au temps de charge dudit réseau de formation d'impulsions (M) et une seconde période égale à celle de la fréquence radar impulsionnelle ;
- un réseau d'intégration (3) possédant une constante de temps égale à celle du filtre d'alimentation de puissance haute tension,
- un commutateur de mise à la terre (2) relié audit circuit de mise en marche/remise à zéro (1) et relié audit réseau d'intégration (3) pour décharger ledit réseau d'intégration pendant ladite première période et le charger pendant ladite seconde période ;
- un détecteur de crête (4) relié audit réseau d'intégration (3) pour produire un signal de sortie dont l'amplitude varie proportionnellement à ladite fréquence radar impulsionnelle ;
- un amplificateur (6) relié audit détecteur de crête (4) et produisant une sortie correspondant audit signal de sortie amplifié dudit détecteur de crête (4), et en ce que
- le circuit de sommation (7) ajoute ladite sortie dudit amplificateur (6) à un signal de référence formant le signal de référence actualisé.
